Europäisches Patentamt

European Patent Office

Office européen des brevets

(19)

(11) **EP 1 382 574 A2**

(12) ## EUROPEAN PATENT APPLICATION

(43) Date of publication:
**21.01.2004 Bulletin 2004/04**

(51) Int Cl.⁷: **C02F 1/68**, C02F 1/00,
B67D 1/00, A23L 2/68

(21) Application number: **03253914.0**

(22) Date of filing: **20.06.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **21.06.2002 JP 2002181523
28.08.2002 JP 2002248426**

(71) Applicant: **Sanden Corporation
Isesaki-shi, Gunma 372-8502 (JP)**

(72) Inventors:
• **Ito, Miwako, c/o Sanden Corporation
Isesaki-shi, Gunma 372-8502 (JP)**
• **Watanabe, Kazushige, c/o Sanden Corporation
Isesaki-shi, Gunma 372-8502 (JP)**
• **Sato, Motoharu, c/o Sanden Corporation
Isesaki-shi, Gunma 372-8502 (JP)**

(74) Representative: **Haley, Stephen
Gill Jennings & Every,
Broadgate House,
7 Eldon Street
London EC2M 7LH (GB)**

(54) **Mineral water making apparatus**

(57)    The mineral water making apparatus has a structure that includes a water tank 10 having a mineral eluting material 11 disposed therein, a water supply pipe 12 for introducing raw water such as tap water into the water tank 10, and a water intake pipe 14 for intaking mineral water made in the water tank 10; and an acidic food-additive supply apparatus 13 for supplying an acidic food additive 13d into the water tank 10 is further installed. Since the acid concentration in the water tank 10 thereby rises, the mineral-eluting efficiency of the mineral eluting material 11 is improved, and the mineral concentration is elevated.

F I G. 1

EP 1 382 574 A2

## Description

The present invention relates to a mineral water making apparatus for making mineral water by adding mineral components to raw water.

Heretofore, as a mineral water making apparatus of this kind, an apparatus wherein mineral stone and a filter medium for removing foreign substances are placed in a water tank has been commonly used. When raw water such as tap water is passed through the water tank, mineral components are added to the tap water, and drinking water containing minerals are provided.

However, the quantity of mineral components actually added to the drinking water in such a mineral water making apparatus is extremely small (quantity of added mineral components: 50 ppm or less as general hardness (GH)), which is unsatisfactory as mineral-containing drinking water.

In order to solve such a problem, a mineral water making apparatus disclosed in Japanese Patent Application Laid-Open No. 6-190379 (1994) was proposed. In this mineral water making apparatus, since carbon dioxide gas was injected into tap water to increase the concentration of free carbon dioxide, and the tap water was brought into contact with a porous body supporting calcium carbonate, the mineral component was eluted in short time, and mineral-containing drinking water of a desired mineral concentration could be made and provided.

However, this mineral water making apparatus had a problem in that a gas cylinder for injecting carbon dioxide gas was required, increasing the costs and enlarging the size of the apparatus. In addition, since the quality of raw water affected the eluting rate of the mineral components, the apparatus had another problem in that it could not maintain the mineral concentration. Furthermore, the apparatus had another problem in that the mineral components deposited in the water intake pipe when the mineral concentration elevated needlessly.

In view of the above-described problems in conventional mineral water making apparatuses, the object of the present invention is to provide a mineral water making apparatus of a simple structure that can improve the mineral elution rate of the mineral eluting material, can maintain the mineral concentration of mineral water constant, and can inhibit the deposition of the mineral components.

The first invention is a mineral water making apparatus comprising a water tank having a mineral eluting material disposed therein, a water supply pipe for introducing raw water such as tap water into the water tank, and a water intake pipe for intaking mineral water produced in the water tank; further comprising an acidic food-additive supply apparatus for supplying an acidic food additive into the water tank.

According to the first invention, since the acidic food-additive is supplied into the water tank, and the acid concentration in the water tank rises, the mineral elution rate of the mineral eluting material is improved, and the mineral concentration of mineral water rises.

The second invention is a mineral water making apparatus comprising a water tank having a mineral eluting material disposed therein, a water supply pipe for introducing raw water such as tap water into the water tank, and a water intake pipe for intaking mineral water produced in the water tank; further comprising an acidic food-additive supply apparatus for supplying an acidic food additive into the water intake pipe.

According to the second invention, since the acidic food-additive is added to the mineral water flowing in the intake pipe, the pH of the mineral water can be controlled, and the deposition of the mineral components in the intake pipe can be inhibited, preventing the clogging of the intake pipe.

The third invention is a mineral water making apparatus comprising a water tank having a mineral eluting material disposed therein, a water supply pipe for introducing raw water such as tap water into the water tank, and a water intake pipe for intaking mineral water made in the water tank; wherein an acidic food additive is disposed in the water tank.

According to the third invention, since both the mineral eluting material and the acidic food additive are disposed in the water tank, the water in the water tank is constantly acidified, and mineral water of a high mineral concentration can be made in short time. The mixture of the mineral eluting material and the acidic food additive may also be disposed.

In the drawings:

FIG. 1 is a water circuit diagram showing a mineral water making apparatus according to the first embodiment;

FIG. 2 is a water circuit diagram showing a mineral water making apparatus according to the second embodiment;

FIG. 3 is a water circuit diagram showing a mineral water making apparatus according to the third embodiment;

FIG. 4 is a block diagram showing a drive control circuit of a solenoid valve according to the third embodiment;

FIG. 5 is a flow chart showing the control of a solenoid valve according to the third embodiment;

FIG. 6 is a water circuit diagram showing a mineral water making apparatus according to the fourth embodiment;

FIG. 7 is a block diagram showing a drive control circuit of a solenoid valve according to the fourth embodiment;

FIG. 8 is a flow chart showing the control of a solenoid valve according to the fourth embodiment;

FIG. 9 is a water circuit diagram showing a mineral water making apparatus according to the fifth embodiment;

FIG. 10 is a water circuit diagram showing a mineral water making apparatus according to the sixth embodiment;

FIG. 11 is a water circuit diagram showing a mineral water making apparatus according to the seventh embodiment;

FIG. 12 is a water circuit diagram showing a mineral water making apparatus according to the eighth embodiment;

FIG. 13 is a front sectional view showing a mineral water making apparatus according to the eighth embodiment;

FIG. 14 is a side sectional view showing a mineral water making apparatus according to the eighth embodiment;

FIG. 15 is an enlarged sectional view showing a mixture according to the eighth embodiment; and

FIG. 16 is a water circuit diagram showing a mineral water making apparatus according to the ninth embodiment.

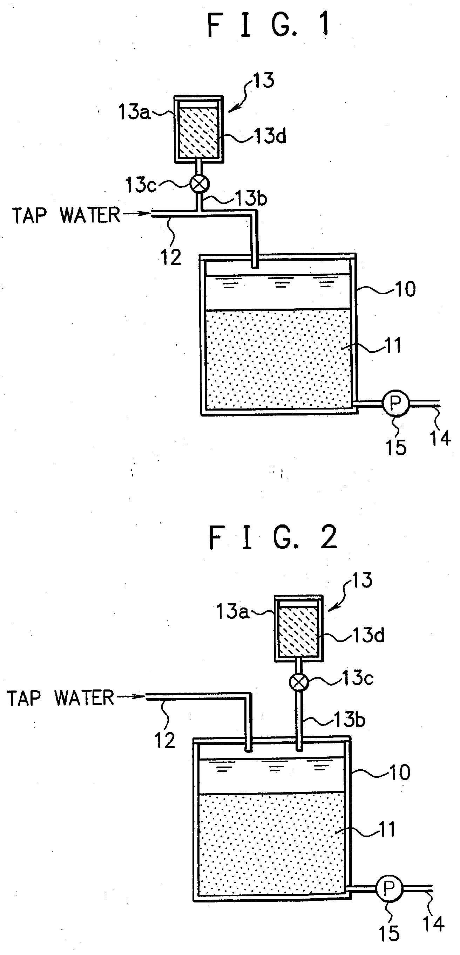

FIG. 1 shows the first embodiment of a mineral water making apparatus according to the present invention.

The mineral water making apparatus has a water tank 10 for making mineral water. A mineral eluting material 11 is disposed in the water tank 10. As the mineral eluting material 11, powdered or granulated coral sand, Mai-fan-shih (healstone), mineral stone and the like are used. By passing water through the mineral eluting material 11, mineral components are eluted into the water, and mineral water is made.

A water-supply pipe 12 is linked to the upper portion of the water tank 10, and tap water (raw water) is supplied into the water tank 10 through the water-supply pipe 12. An acidic food-additive supply apparatus 13 is connected to the water-supply pipe 12. The acidic food-additive supply apparatus 13 is composed of a tank 13a, a derivation pipe 13b connected to the bottom of the tank 13a and to the water-supply pipe 12, and a solenoid valve 13c for opening and closing the derivation pipe 13b. The tank 13a accommodates an acidic food additive 13d. As the acidic food additive 13d, an aqueous solution wherein a food additive that exhibits acidity, for example, citric acid, DL-malic acid, phosphoric acid, and fumaric acid, is used. Of these acidic food additives 13d, citric acid and DL-malic acid have the effect of improving the intake efficiency of mineral components when the mineral water is taken in human bodies.

A water intake pipe 14 connected to a faucet or the like is linked to the lower portion of the water tank 10. A pump 15 is installed in a water intake pipe 14. While a pump 15 is activated, mineral water made in the water tank 10 is supplied to the faucet through the water intake pipe 14.

According to this embodiment, when the solenoid valve 13c is opened, the acidic food additive 13d is added in tap water flowing in the water-supply pipe 12, and the acidity of water stored in the water tank 10 rises. The increase of the level of acid water improves the rate of mineral elution of the mineral eluting material 11.

Calcium carbonate ($CaCO_3$) is used as the mineral eluting material 11, it causes the following chemical reaction:

$$CaCO_3 + 2H^+ \rightarrow Ca^{2+} + H_2O + CO_2$$

By the elution of mineral ions ($Ca^{2+}$) as described above, drinking water having a high mineral concentration can be made.

FIG. 2 shows the second embodiment of a mineral water making apparatus according to the present invention. In the first embodiment described above, the acidic food additive 13d is supplied into the water tank 10 through the water-supply pipe 12. Whereas in the second embodiment, the acidic food additive 13d is directly supplied into the water tank 10.

In the first embodiment described above, the operation for supplying the acidic food additive 13d follows the water-supply operation of tap water; while in the second embodiment, the pathway for supplying the acidic food additive is separated from the pathway for supplying tap water, the acidic food additive 13d can be supplied into the water tank 10 as desired regardless of the supply of tap water. Since other constitutions and operations are same as in the first embodiment, the description thereof will be omitted.

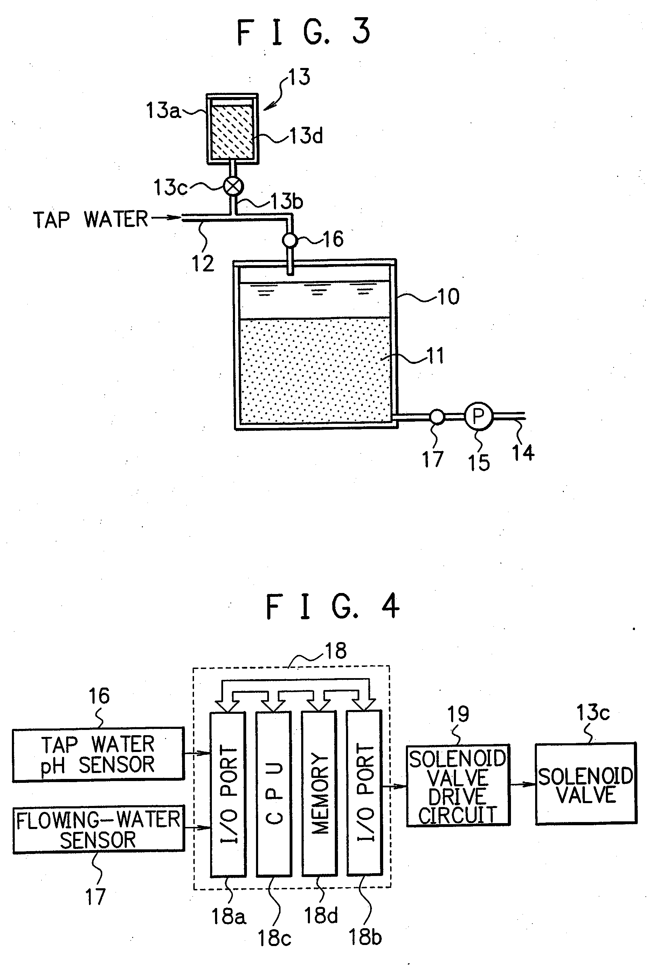

FIGS. 3 to 5 show the third embodiment of a mineral water making apparatus according to the present invention. The same component parts as in the above-described first embodiment will be denoted by the same reference numerals and characters, and the description thereof will be omitted.

In this embodiment, the quantity supplied of the acidic food additive 13d is controlled on the basis of the quality, i.e., the pH value of tap water flowing in the water-supply pipe 12. A pH sensor 16 for sensing the pH value of tap water is installed in the water-supply pipe 12. A flowing-water sensor 17 for sensing the presence of flowing water in the water intake pipe 14 is installed in the water intake pipe 14.

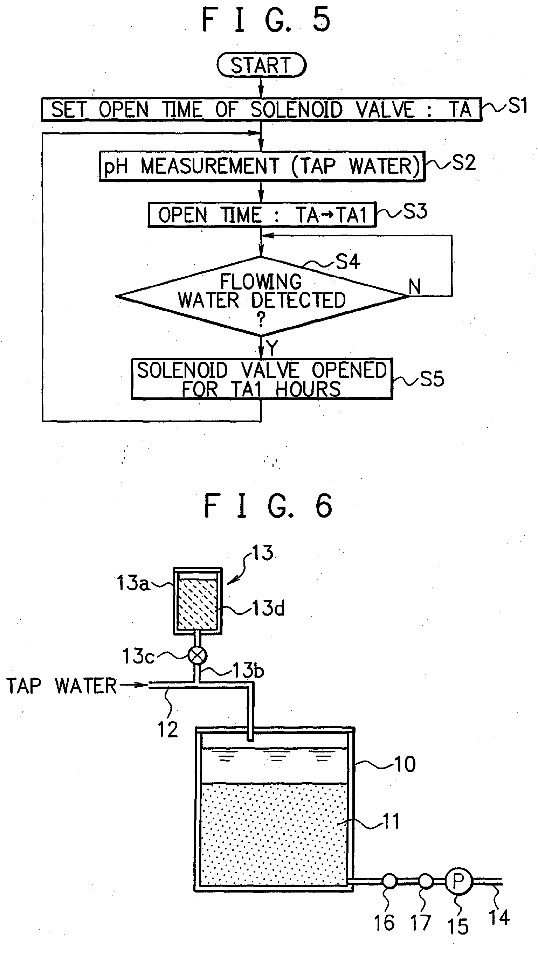

As FIG. 4 shows, the mineral water making apparatus has a controller 18 composed of microcomputers as control means for controlling the solenoid valve 13c. The controller 18 has I/O ports 18a and 18b, a CPU 18c, and a memory 18d. The memory 18d stores the setting-open time TA of the solenoid valve 13c in advance. The time TA determines the adding quantity of the acidic food additive 13d. The time TA is set on the basis of an empirical rule that the desired mineral concentration in the mineral water can be achieved when the pH of tap water is normal, and the solenoid valve 13c is opened for the time TA. The controller 18 controls the solenoid valve 13c through a solenoid valve drive circuit 19 as shown in the flow chart of FIG. 5.

First, as described above, the setting-open time TA of the solenoid valve 13c has been stored in the memory 18d (S1). The pH value of tap water in the water-supply pipe 12 is sensed by the pH sensor 16, and measured by the controller 18 (S2). If the measured pH value is high, the mineral-elution rate lowers, and if the measured pH value is low, the mineral-elution rate rises. Therefore, while the measured pH value is high, the time TA is lengthened to increase the supply quantity of the acidic food additive 13d; whereas when the measured pH value is low, the time TA is shortened to decrease the supply quantity of the acidic food additive 13d. In other words, the setting-open time TA is corrected to time TA1 in response to the pH value of tap water (S3). Under these circumstances, the flowing-water sensor 17 monitors whether water flows in the water intake pipe 14 or not (whether there is water intake or not) (S4). When the flowing-water sensor 17 senses flowing water, the solenoid valve 13c is opened for time TA1 (S5). Thereby, since the acidic food additive 13d corresponding to the pH value of tap water is supplied into the water tank 10, the concentration of the produced mineral water is maintained constant.

FIGS. 6 to 8 show the fourth embodiment of a mineral water making apparatus according to the present invention. The same component parts as in the above-described third embodiment will be denoted by the same reference numerals and characters, and the description thereof will be omitted.

In the third embodiment, the pH sensor 16 is installed in the water-supply pipe 12, and the open time of the solenoid valve 13c is controlled on the basis of the quality of tap water flowing in the water-supply pipe 12. Whereas in this embodiment, the pH sensor 16 is installed in the water intake pipe 14, and the open time of the solenoid valve 13c is controlled on the basis of the quality of mineral water flowing in the water intake pipe 14.

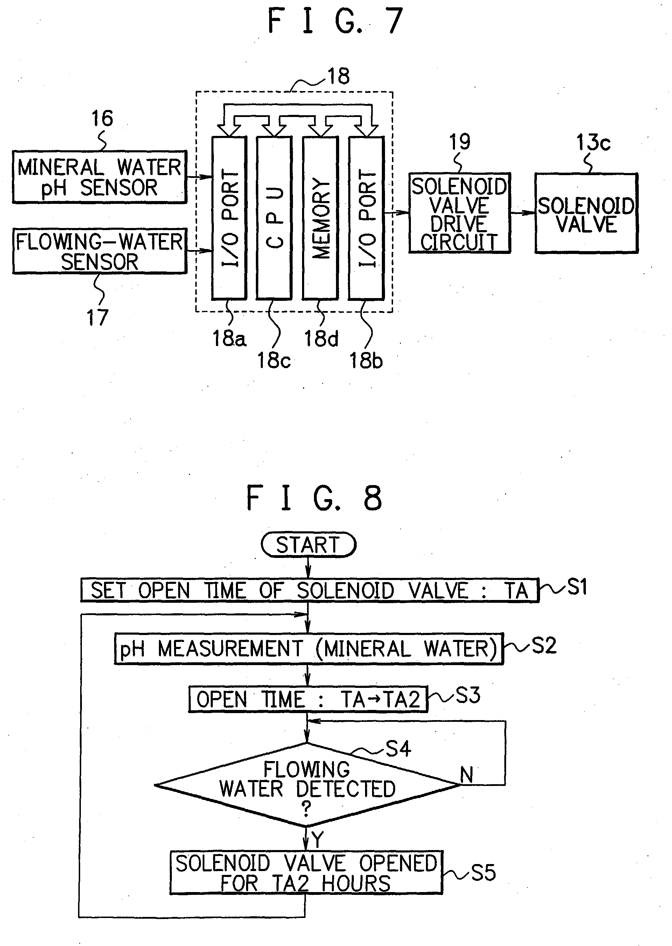

As FIG. 7 shows, in the same way as in the above-described third embodiment, the fourth embodiment has a controller 18 having I/O ports 18a and 18b, a CPU 18c, and a memory 18d. The memory 18d stores the setting-open time TA of the solenoid valve 13c in advance as in the above-described third embodiment. The control of the solenoid valve 13c will be described referring to the flowchart of FIG. 8.

First, as described above, the setting-open time TA of the solenoid valve 13c has been stored in the memory 18d (S1). The pH value of mineral water in the water intake pipe 14 is sensed by the pH sensor 16, and measured by the controller 18 (S2). While the measured pH value is high, the mineral-elution rate lowers, and while the measured pH value is low, the mineral-elution rate rises. Therefore, when the measured pH value is high, the time TA is lengthened to increase the supply quantity of the acidic food additive 13d; whereas when the measured pH value is low, the time TA is shortened to decrease the supply quantity of the acidic food additive 13d. In other words, the setting-open time TA is corrected to time TA2 in response to the pH value of the mineral water (S3). The system is allowed to stand in such a state, and the flowing-water sensor 17 monitors whether water flows in the water intake pipe 14 or not (whether there is water intake or not) (S4). When the flowing-water sensor 17 senses flowing water, the solenoid valve 13c is opened for time TA2 (S5). Thereby, since the acidic food additive 13d corresponding to the pH value of the mineral water is supplied into the water tank 10, the concentration of the produced mineral water is maintained constant.

In the third and fourth embodiments, as described above, although water quality is sensed by using the pH sensor 16 to maintain the mineral concentration of the mineral water constant, the present invention is not limited thereto. For example, a conductivity sensor (not shown) for sensing the electric conductivity of tap water or mineral water may be installed in place of the pH sensor 16 to control the open time of the solenoid valve 13c on the basis of the electric conductivity sensed by the conductivity sensor.

More specifically, while the electric conductivity of tap water or mineral water is low, the mineral concentration is high. On the other hand, while the electric conductivity of tap water or mineral water is high, the mineral concentration is low. Therefore, when the measured electric conductivity is low, the open time of the solenoid valve 13c is shortened to decrease the quantity of mineral elution. On the other hand, when the measured electric conductivity is high, the open time of the solenoid valve 13c is lengthened to increase the quantity of mineral elution. Thereby, the mineral concentration in the mineral water can be maintained at a predetermined value.

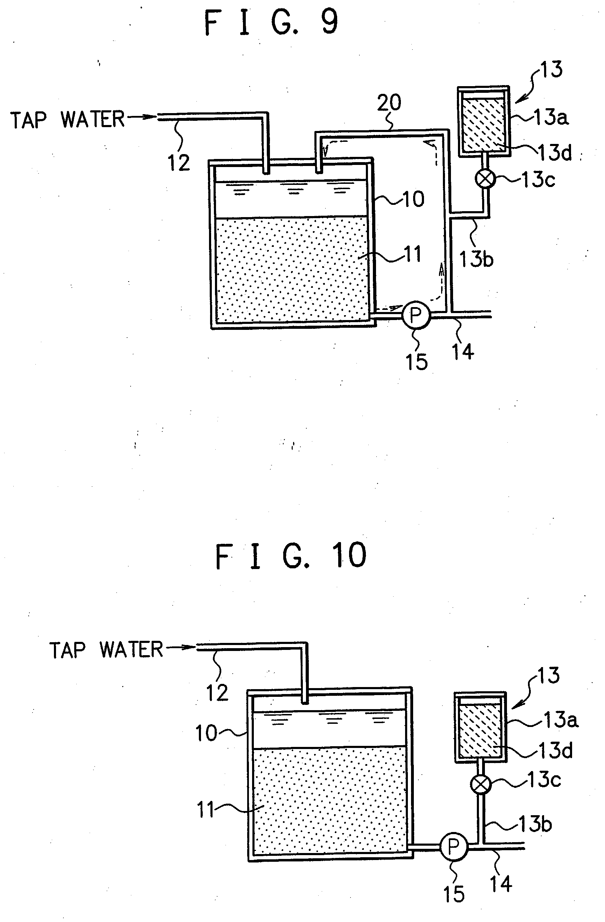

FIG. 9 shows the fifth embodiment of a mineral water making apparatus according to the present invention. The above-described embodiments have constitutions wherein the acidic food additive 13d is added before mineral treatment. Whereas this embodiment has a constitution wherein all or a part of the produced mineral water is returned into the water tank 10, and the acidic food additive 13d is added to the returned water. The same component parts as in the above-described first embodiment will be denoted by the same reference numerals and characters, and the description thereof will be omitted.

Specifically, a water-circulating pipe 20 is installed to connect to the downstream side of the pump 15 on the intake pipe 14 and to the upper portion of the water tank 10. Thereby, as broken-line arrows in FIG. 9 show, mineral-water circulation means that can circulate the mineral water in the water tank 10 is constituted. More specifically, this mineral-water circulation means is constituted so that the mineral water in the water tank 10 is circulated in the order of, the water intake pipe 14 → the pump 15 → the water intake pipe 14 → the mineral-water circulating pathway 20 → the water tank 10.

A derivation pipe 13b of the acidic-food-additive supply apparatus 13 is also connected to the middle of the mineral-water circulating pathway 20.

In the mineral water making apparatus according to this embodiment, the faucet of the water intake pipe 14 is closed, and simultaneously, the solenoid valve 13c of the acidic-food-additive supply apparatus 13 is opened, then the pump 15 is activated. Thereby, since all the mineral water flows out of the water tank 10 as shown by the broken-line arrows in FIG. 9, and the acidic food additive 13d is added to the mineral water, the concentration of minerals in the water tank 10 can be raised.

The faucet of the water intake pipe 14 is opened, and simultaneously, the solenoid valve 13c of the acidic-food-additive supply apparatus 13 is opened, then the pump 15 is activated. Thereby, the mineral water passing through the water intake pipe 14 is guided to the faucet, a part of the mineral water passing through the water intake pipe 14, which contains the acidic food additive 13d, enters in the mineral-water circulating pathway 20, and returns to the water tank 10. Therefore, the acidity in the water tank 10 is raised by the acidic food additive 13d added to the mineral water, and the mineral water having a high mineral concentration can be obtained.

As in the above-described third and fourth embodiments, a pH sensor 16 or a conductivity sensor may be installed to determine the open time of the solenoid valve 13c depending on the quality of tap water or mineral water.

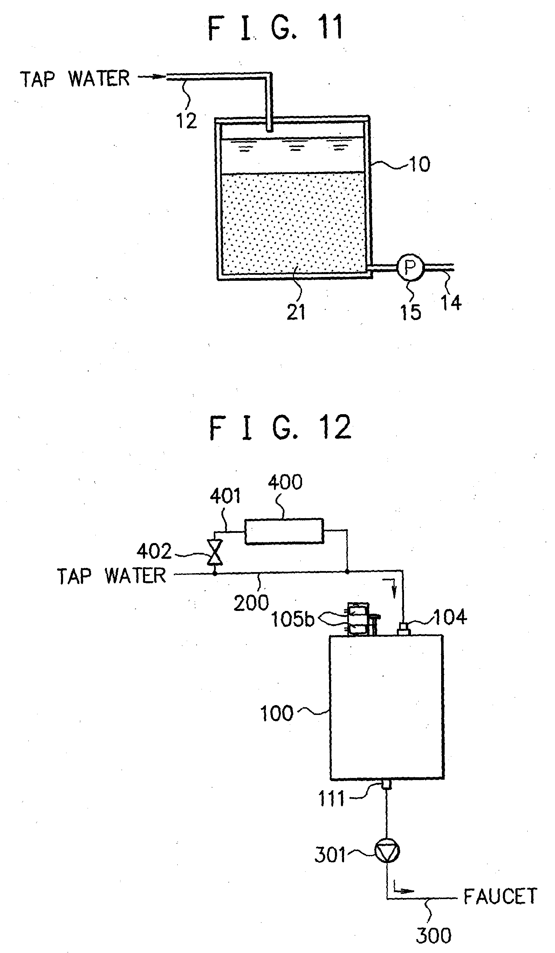

FIG. 10 shows the sixth embodiment of a mineral water making apparatus according to the present invention. In the above-described embodiments, the acidic food additive 13d is supplied into the water tank 10. Whereas in this embodiment, the acidic food additive 13d is supplied into the water intake pipe 14. The same component parts as in the above-described first embodiment will be denoted by the same reference numerals and characters, and the description thereof will be omitted.

Specifically, the derivation pipe 13b of the acidic-food-additive supply apparatus 13 is connected to the water intake pipe 14. The solenoid valve 13c is opened or closed to control the supply of the acidic food additive 13d to the water intake pipe 14.

If the mineral concentration is needlessly high, eluted minerals may be precipitated and mixed in beverage, and mineral water unsuitable for beverage may be made. Therefore, in the mineral water making apparatus according to this embodiment, when intaking mineral water, the solenoid valve 13c is opened to introduce the acidic food additive 13d into the water intake pipe 14. Thereby, the mineral eluting rate is improved, and no mineral components extract in the water intake pipe 14.

As in the above-described third and fourth embodiments, a pH sensor 16 or a conductivity sensor may be installed to determine the open time of the solenoid valve 13c depending on the quality of tap water or mineral water. The flow rate of the acidic food additive 13d is controlled using not only the solenoid valve 13c, but a pump (not shown) may be used in place of the solenoid valve 13c.

FIG. 11 shows the seventh embodiment of a mineral water making apparatus according to the present invention. In the above-described embodiments, the acidic food additive is placed outside the water tank 10. Whereas in this embodiment, the acidic food additive 13d is placed in the water tank 10. The same component parts as in the above-described first embodiment will be denoted by the same reference numerals and characters, and the description thereof will be omitted.

Specifically, as well as a granulated or powdered acidic food additive, a granulated or powdered mineral eluting material is mixed to form a mixture 21, and the mixture 21 is disposed in the water tank 10. According to this embodiment, the eluted minerals can be easily acidified, and mineral water having a high mineral concentration can be made.

FIGS. 12 to 15 show the eighth embodiment of a mineral water making apparatus according to the present invention. In the above-described first to seventh embodiments, only the mineral eluting material 11 is disposed in the water tank 10, and a liquid acidic food additive 13d is used. Whereas in this embodiment, an electrode for eluting minerals is disposed in the water tank as well as a mineral eluting material, and a solid acidic food additive is used. A mineral water making apparatus according to the eighth embodiment will be described referring to FIGS. 12 to 15.

The mineral water making apparatus has a water tank 100, a water-supply pipe 200 for supplying raw water such as tap water into the water tank 100, and a water-intake pipe 300 for guiding the mineral water made in the water tank 100 to a faucet (not shown) using a pump 301.

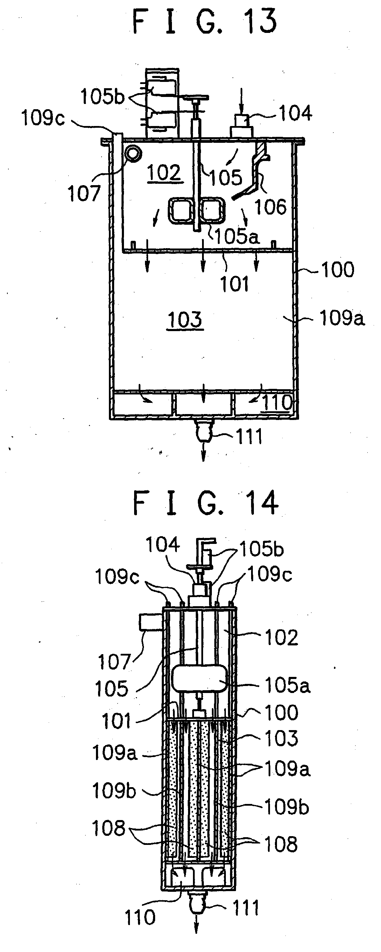

First, the structure of the water tank 100 will be described in detail referring to FIGS. 13 and 14. The water tank 100 is formed in a flat box shape, and the interior thereof is substantially divided into upper and lower portions by a diaphragm 101 that can pass water. Above the diaphragm 101, a water storage chamber 102 for supplying tap water is formed. Below the diaphragm 101, an electrolysis chamber 103 for electrolyzing water is formed.

A water conduit tube 104 to be connected to the water-supply pipe 200 is installed on the upper plate of the water storage chamber 102, and tap water is introduced into the water storage chamber 102 through the water conduit tube 104. A water-level detector 105 is installed in the water storage chamber 102. The water-level detector 105 has a structure to detect the up-and-down motion of a float 105a using upper and lower micro-switches 105b. The supply and stop of tap water is controlled on the basis of detection signals from each of the micro-switches 105b to maintain the water level in the water storage chamber 102 as predetermined. A guide plate 106 is also installed in the water storage chamber 102. The guide plate 106 guides tap water supplied from the water conduit tube 104 toward the central portion of the water storage chamber 102, so that the tap water flows from the central portion of the water storage chamber 102 to the entire water storage chamber 102. The reference numeral 107 denotes an overflow pipe for draining water exceeding the allowable quantity.

A plurality of mixtures 108 and a plurality of positive and negative pairs of electrodes for eluting minerals 109a and 109b are alternately disposed in the electrolysis chamber 103. The terminal 109c of each electrode 109a and 109b passes through the diaphragm 101 and protrudes from the upper plate of the water storage chamber 102 to be connected to the power supply.

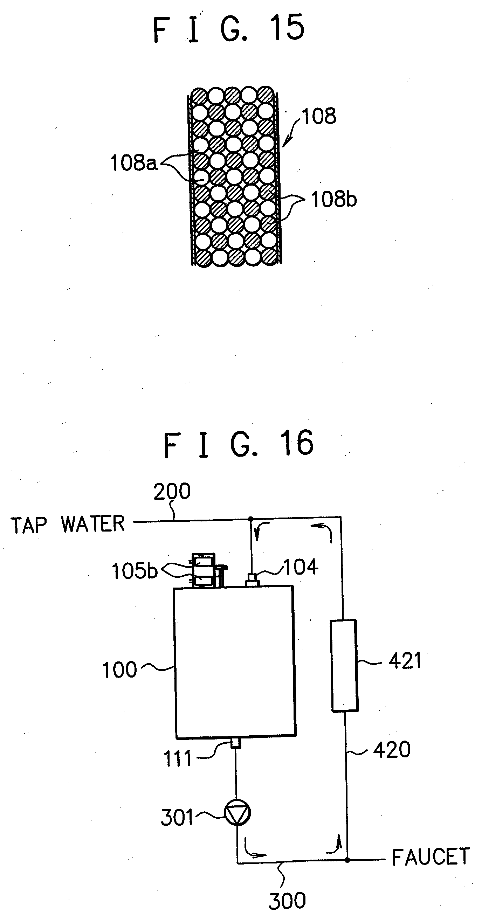

The mixture 108 is composed of a mineral eluting material 108a and a conductive material 108b as shown in FIG. 15. As the mineral eluting material 108a, powdered or granulated coral sand, healstone, mineral stone or the like is used. On the other hand, as the conductive material 108b, any one of powdered activated charcoal, granulated activated charcoal, fibrous activated charcoal, wood charcoal, carbon black, a gold-, silver-, or platinum-based metal; or the mixture thereof is used. Since a carbon-based, or gold-, silver-, or platinum-based metal is used as the conductive material 108b, even if the conductive material is eluted, it is harmless to human bodies. If activated charcoal is used as the conductive material 108b, the activated charcoal may be coated with silver to improve electric conductivity. Although the mixture 108 is composed of the mineral eluting material 108a and the conductive material 108b, as described above, water can pass through the mixture 108. In order to facilitate assembly and maintenance, the mixture 108 may be filled in a water-permeable container in advance, and the container may be disposed in the electrolysis chamber 103. In this case, the container filled with powdered or granulated mineral eluting material 108a and the conductive material 108b is used.

A DC voltage from a DC power source (not shown) is impressed between one electrode for eluting minerals 109a and the other electrode for eluting minerals 109b, and the one electrode for eluting minerals 109a constitutes a positive electrode, and the other electrode for eluting minerals 109b constitutes a negative electrode. The voltage, polarity, impressing time and the like of the DC power source are controlled by the control unit (not shown).

While a DC voltage is applied between the electrodes for eluting minerals 109a and 109b of the mineral water making apparatus according to this embodiment, in the side of the electrode for eluting minerals 109a, which is the positive electrode, water reacts as follows:

$$2H_2O \rightarrow 4H^+ + O_2 + 4e^-$$

Thus, the hydrogen ion concentration of the water in the positive electrode side rises to generate acidic water. On the other hand, in the side of the electrode for eluting minerals 109b, which is the negative electrode, water reacts as follows:

$$4H_2O + 4e^- \rightarrow 2H_2 + 4OH^-$$

Thus, alkaline water is generated in the negative electrode side. When calcium carbonate ($CaCO_3$) is used as the mineral eluting material 108a, the calcium carbonate reacts with acidic water as follows:

$$CaCO_3 + 2H^+ \rightarrow Ca^{2+} + H_2O + CO_2$$

Thus, mineral ions ($Ca^{2+}$) are eluted.

Here, since the mineral eluting material 108a is an insulator, it may act as the factor to lower conductivity between the electrodes for eluting minerals 109a and 109b. However, since a conductive material 108b is mixed with the mineral eluting material 108a in the mineral water making apparatus of this embodiment, the efficiency of electrolysis is not lowered, and furthermore, the efficiency of mineral eluting is not lowered.

A confluence chamber 110 for combining the mineral water generated in the electrolysis chamber 103 is disposed on the lower portion of the water tank 100. The mineral water flowing in the confluence chamber 110 flows down to the water-intake pipe 300 through the derivation pipe 111.

Next, the structure of the water-supply pipe 200 side will be described referring to FIG. 12. An acidic-food-additive supply apparatus 400 accommodating an acidic food additive is installed on the water-supply pipe 200 in the upstream side of the water tank 100. The acidic-food-additive supply apparatus 400 is installed from the middle of the water-supply pipe 200 in parallel to a part of the water-supply pipe 200 through the branch pipe 401. An open-close valve 402 is installed on the upstream side of the branch pipe 401. The supply of water to the acidic-food-additive supply apparatus 400 is controlled by the open-close operation of the open-close valve 402. Here, as in the above-described first embodiment, the acidic food additive may be any food additive that exhibits acidity, such as citric acid, DL-malic acid, phosphoric acid, and fumaric acid. The acidic food additive is stored in the acidic-food-additive supply apparatus 400 in the form of powdered or granulated solid so as to be efficiently eluted into tap water.

According to this embodiment, mineral components are eluted from the mineral eluting material 108a by impressing a DC voltage between electrodes for eluting minerals 109a and 109b. When the pump 301 is activated, tap water flows as arrows in FIGS. 12 to 14 show, and mineral water flows to the faucet.

In taking the mineral water, when the open-close valve 402 is opened, a part of tap water flows into the acidic-food-additive supply apparatus 400, and the rise of pH in the water tank 100 is inhibited. Thereby, the lowering of mineral dissolution is prevented, and the mineral water of a high mineral concentration can be formed, and the precipitation of the mineral components can also be prevented.

Although the open-close valve 402 is installed in the branch pipe 401, a flow regulating valve (not shown) may be installed in place of the open-close valve 402. Thereby, the eluting quantity of the acidic food additive can be optionally controlled, and the mixing of excessive additive can be prevented.

In the same as in the above-described third and fourth embodiments, a pH sensor 16 or a conductivity sensor may be installed in the water-supply pipe 200 or the water-intake pipe 300 to control the open time of the open-close valve 402 on the basis of the quality of tap water or mineral water.

FIG. 16 shows the ninth embodiment of a mineral water making apparatus according to the present invention. The same constituting parts as in the above-described eighth embodiment will be denoted by the same reference numerals and characters, and the description thereof will be omitted.

The above-described eighth embodiment has the structure wherein the acidic food additive is added in the upstream side of the water tank 100. Whereas in this embodiment, a mineral-water circulating pipe 420, whose one end is connected to the downstream side of the pump 301 in the water-intake pipe 300, and whose other end is connected to the water-supply pipe 200, is installed. An acidic-food-additive supply apparatus 421 is installed in the mineral-water circulating pipe 420. The acidic-food-additive supply apparatus 421 accommodates a powdered or granulated acidic food additive as the acidic-food-additive supply apparatus 400 in the eighth embodiment.

According to this embodiment, while the faucet is opened and the pump 301 is activated, a part of the mineral water from the water-intake pipe 300 returns to the water tank 100 as the arrows in FIG. 16 show. Thereby, the mineral concentration of the mineral water can be raised. Since an acidic food additive is added to the mineral water returning to the water tank 100, the rise of pH in the electrolysis vessel can be inhibited, and the mineral concentration of the mineral water can further be raised.

Although the other end of the mineral-water circulating pipe 420 is connected to the water-supply pipe 200, the other end of the mineral-water circulating pipe 420 may be directly connected to the water tank 100.

As in the above-described fifth embodiment, when the pump 301 is activated in the state that the faucet is closed, since all the mineral water flowing in the water-intake pipe 300 returns to the water tank 100 through the mineral-water circulating pipe 420, the mineral concentration of the mineral water in the water tank 100 further rises. Other constitutions and functions are the same as the constitutions and functions of the eighth embodiment.

**Claims**

1. A mineral water making apparatus comprising a water tank 10 and 100 having a mineral eluting material 11 disposed therein, a water supply pipe 12 and 200 for introducing raw water such as tap water into said water tank 10 and 100, and a water intake pipe 14 and 300 for intaking mineral water made in said water tank 10 and 100;
   further comprising an acidic food-additive supply apparatus 13 and 400 and 421 for supplying an acidic food additive 13d into said water tank 10 and 100.

2. The mineral water making apparatus according to claim 1, further comprising a mineral water circulation system for returning at least a part of mineral water running off said water tank 10 and 100 to said water tank 10 and 100, wherein said acidic food-additive supply apparatus 13 and 421 supplies an acidic food additive 13d into said water tank 10 and 100 through said mineral water circulation system.

3. The mineral water making apparatus according to claim 1, wherein said acidic food-additive supply apparatus 13 and 421 is installed on said water supply pipe 12 and 200.

4. The mineral water making apparatus according to claim 1, wherein said acidic food-additive supply apparatus 13 and 421 is installed separately from said water supply pipe 12 and 200, and an acidic food additive 13d is directly supplied into said water tank 10 and 100.

5. A mineral water making apparatus comprising a water tank 10 and 100 having a mineral eluting material 11 disposed therein, a water supply pipe 12 and 200 for introducing raw water such as tap water into said water tank 10 and 100, and a water intake pipe 14 and 300 for intaking mineral water made in said water tank 10 and 100;
   further comprising an acidic food-additive supply apparatus 13 for supplying an acidic food additive 13d into said water intake pipe 14 and 300.

6. A mineral water making apparatus comprising a water tank 10 and 100 having a mineral eluting material 11 disposed therein, a water supply pipe 12 and 200 for introducing raw water such as tap water into said water tank 10 and 100, and a water intake pipe 14 and 300 for intaking mineral water made in the water tank 10 and 100;

wherein an acidic food additive 13d is disposed in said water tank 10 and 100.

7. The mineral water making apparatus according to claim 1, wherein a pair of positive and negative electrodes 109a and 109b applied with a direct-current voltage for eluting minerals are installed in said water tank 10 and 100.

8. The mineral water making apparatus according to claim 2, wherein a pair of positive and negative electrodes 109a and 109b supplied with a direct-current voltage for eluting minerals are installed in said water tank 10 and 100.

9. The mineral water making apparatus according to claim 3, wherein a pair of positive and negative electrodes 109a and 109b supplied with a direct-current voltage for eluting minerals are installed in said water tank 10 and 100.

10. The mineral water making apparatus according to claim 4, wherein a pair of positive and negative electrodes 109a and 109b supplied with a direct-current voltage for eluting minerals are installed in said water tank 10 and 100.

11. The mineral water making apparatus according to claim 5, wherein a pair of positive and negative electrodes 109a and 109b supplied with a direct-current voltage for eluting minerals are installed in said water tank 10 and 100.

12. The mineral water making apparatus according to claim 6, wherein a pair of positive and negative electrodes 109a and 109b supplied with a direct-current voltage for eluting minerals are installed in said water tank 10 and 100.

13. The mineral water making apparatus according to claim 7, wherein a conductive material 108b is disposed in said water tank 10 and 100.

14. The mineral water making apparatus according to claim 8, wherein a conductive material 108b is disposed in said water tank 10 and 100.

15. The mineral water making apparatus according to claim 9, wherein a conductive material 108b is disposed in said water tank 10 and 100.

16. The mineral water making apparatus according to claim 10, wherein a conductive material 108b is disposed in said water tank 10 and 100.

17. The mineral water making apparatus according to claim 11, wherein a conductive material 108b is disposed in said water tank 10 and 100.

18. The mineral water making apparatus according to claim 12, wherein a conductive material 108b is disposed in said water tank 10 and 100.

19. The mineral water making apparatus according to claim 1, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

20. The mineral water making apparatus according to claim 2, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

21. The mineral water making apparatus according to claim 3, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

22. The mineral water making apparatus according to claim 4, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

23. The mineral water making apparatus according to claim 5, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

**24.** The mineral water making apparatus according to claim 7, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

**25.** The mineral water making apparatus according to claim 8, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

**26.** The mineral water making apparatus according to claim 9, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

**27.** The mineral water making apparatus according to claim 10, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

**28.** The mineral water making apparatus according to claim 11, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

**29.** The mineral water making apparatus according to claim 13, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

**30.** The mineral water making apparatus according to claim 14, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

**31.** The mineral water making apparatus according to claim 15, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

**32.** The mineral water making apparatus according to claim 16, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

**33.** The mineral water making apparatus according to claim 17, further comprising a water-quality detector for detecting the quality of at least one of the raw water supplied into said water tank 10 and 100, and the mineral water made in said water tank 10 and 100; and a controller 18 for controlling the quantity of the supplied acidic food additive 13d on the basis of the detection signal from said water-quality detector.

**34.** The mineral water making apparatus according to any of claims 19 to 33, wherein said water-quality detector is at least one of a pH sensor 16 for sensing the pH of the raw water supplied into said water tank 10 and 100, or the mineral water made in said water tank 10 and 100; or a conductivity detector for detecting the electrical conductivity of the raw water supplied into said water tank 10 and 100, or the mineral water made in said water tank 10 and 100.

# F I G. 1

# F I G. 2

# F I G. 3

# F I G. 4

# F I G. 5

# F I G. 6

EP 1 382 574 A2

# F I G. 7

# F I G. 8

START

SET OPEN TIME OF SOLENOID VALVE : TA  ～S1

pH MEASUREMENT (MINERAL WATER) ～S2

OPEN TIME : TA→TA2 ～S3

FLOWING WATER DETECTED ? ～S4  N

Y

SOLENOID VALVE OPENED FOR TA2 HOURS ～S5

# F I G. 9

# F I G. 10

# F I G. 11

TAP WATER →

12

10

21

P

15

14

# F I G. 12

401

400

402

TAP WATER

200

105b

104

100

111

301

300

FAUCET

# F I G. 13

# F I G. 14

# F I G. 15

108
108a
108b

# F I G. 16

200
TAP WATER
105b
104
100
421
111
420
301
FAUCET
300